Europäisches Patentamt

European Patent Office

Office européen des brevets

(11) Veröffentlichungsnummer: **0 439 841 A1**

## (12) EUROPÄISCHE PATENTANMELDUNG

(21) Anmeldenummer: 90125807.9

(22) Anmeldetag: 29.12.90

(51) Int. Cl.⁵: **F16C 33/58**

(30) Priorität: 02.02.90 DE 4003052

(43) Veröffentlichungstag der Anmeldung:
07.08.91 Patentblatt 91/32

(84) Benannte Vertragsstaaten:
**DE ES FR GB IT**

(71) Anmelder: **INA Wälzlager Schaeffler KG**
**Industriestrasse 1-3 Postfach 1220**
**W-8522 Herzogenaurach(DE)**

(72) Erfinder: **Pflügner, Wolfgang, Dipl.-Ing.**
**Rückertstrasse 13**
**W-8522 Herzogenaurach(DE)**

(54) **Radial-Kugellager.**

(57) Bei einem Radial-Kugellager mit zwei aus Blechband rundgebogenen Laufringen (1, 6), in welche Kugellaufbahnen (2, 7) eingeformt sind, in denen Kugeln (11) abrollen, die vorzugsweise in einem Käfig (12) auf Abstand gehalten sind, werden bei einfacher Herstellbarkeit zum Zwecke der Überbrückung großer Toleranzen angrenzender Bauteile

- die Laufringe (1, 6) in beiden axialen Richtungen im Anschluß an die Kugellaufbahnen (2, 7) mit angeformten zylindrischen Verlängerungen (3, 8) versehen,
- an wenigstens den äußeren Laufring (1) Versteifungsborde (4) angeformt und
- der äußere Laufring im Bereich der Kugellaufbahn (2) mit einen geringeren Außendurchmesser, als im Bereich der Versteifungsborde (4) versehen.

Fig. 1

# RADIAL-KUGELLAGER

Die Erfindung betrifft ein Radial-Kugellager mit zwei aus Blechband rundgebogenen Laufringen, in welche Kugellaufbahnen eingeformt sind, in denen Kugeln, die Vorzugsweise in einem Käfig auf Abstand gehalten sind, abrollen.

Bei bekannten derartigen Kugellagern wird den Laufringen bei ihrem Rundbiegen aus einem Blechband gleichzeitig ein annähernd halbkreisförmiges, rinnenartiges Querschnittsprofil gegeben, in dem die Kugeln abrollen. Die aus Blech rundgebogenen Laufringe ihrerseits stützen sich in halbkreisförmigen Rillen der angrenzenden Bauteile ab (DE-OS 16 02 446).

Gegenüber diesem bekannten Stand der Technik liegt der Erfindung die Aufgabe zugrunde, unter Verwendung derartiger, aus einem Blechband rundgebogener Laufringe ein Kugellager zu schaffen, welches bei einfachster Herstellbarkeit größere Toleranzen der angrenzenden Bauteile bei Aufrechterhaltung von Spielfreiheit im Lager überbrücken kann.

Dieses Ziel erreicht die Erfindung durch die Kombination der folgenden Merkmale:

- Die Laufringe sind in beiden axialen Richtungen im Anschluß an die Kugellaufbahnen mit angeformten zylindrischen Verlängerungen versehen,
- an wenigstens den äußeren Laufring sind Versteifungsborde angeformt und
- der äußere Laufring weist im Bereich der Kugellaufbahn einen geringeren Außendurchmesser auf, als im Bereich der Versteifungsborde.

Ein derartiger Laufring ist einfach herstellbar, weist wegen der Versteifungsborde eine ausreichende Stabilität auf, die sich jedoch wegen der dazwischenliegenden zylindrischen Verlängerungen nicht auf die Kugellaufbahnen auswirkt, wobei hinzukommt, daß die Kugellaufbahn wegen der Tatsache, daß sie einen geringeren Außendurchmesser aufweist als die Versteifungsborde, radial in bestimmten Grenzen ausweichen kann, wodurch vorhandene Toleranzen in der Bohrung des den Außenlaufring aufnehmenden Bauteiles überbrückt werden können.

In zweckmäßiger Weiterbildung der Erfindung kann der innere Laufring in seiner Bohrung zur Toleranzüberbrückung eine Hülse aus polymerem Werkstoff enthalten, die zwischen radialen Borden, die an die Endbereiche der Verlängerungen angeformt sind, gehalten ist. Auf diese Weise ist es zusätzlich möglich, auch größere Toleranzen des Außendurchmessers einer den inneren Laufring tragenden Welle hinzunehmen, ohne daß sich diese schädlich auf das Lager auswirken. Durch die radialen Borde an den Endbereichen des inneren Laufringes wird gleichzeitig die aus polymerem Werkstoff bestehende Hülse zu einer transportfähigen Baueinheit mit dem inneren Laufring verbunden.

Zweckmäßig ist es, die Fugen, an denen die Enden der Blechbänder aneinandergrenzen, zur Lagerachse geneigt auszuführen, weil sich dies günstig auf das Abrollen der Kugeln in den Kugellaufbahnen auswirkt.

Wenn es für zweckmäßig gehalten wird, kann wenigstens der eine der Laufringe an der Fuge verschweißt werden, wobei es zweckmäßig ist, die Schweißverbindung nur im Bereich der zylindrischen Verlängerungen, bzw. der Versteifungsborde vorzusehen, um so zu vermeiden, daß beim Schweißen im Laufbahnbereich Gefügeveränderungen auftreten, die sich schädlich auf die Lebensdauer des Wälzlagers auswirken könnten.

Beim Abschneiden des Blechbandes auf die erforderliche Länge erfolgt durch das Schneidwerkzeug an der Schnittkante auf der einen Seite des Blechbandes ein Materialeinzug in Form einer leichten Abrundung. Es ist zweckmäßig, das Blechband beim Rundbiegen so zu legen, daß dieser Materialeinzug im fertig gebogenen Zustand von der Kugellaufbahn wegweist, was einem stoßfreien Abrollen der Kugeln entgegenkommt.

In den Zeichnungen sind drei Ausführungsbeispiele der Erfindung in Teil-Längsschnitten dargestellt.

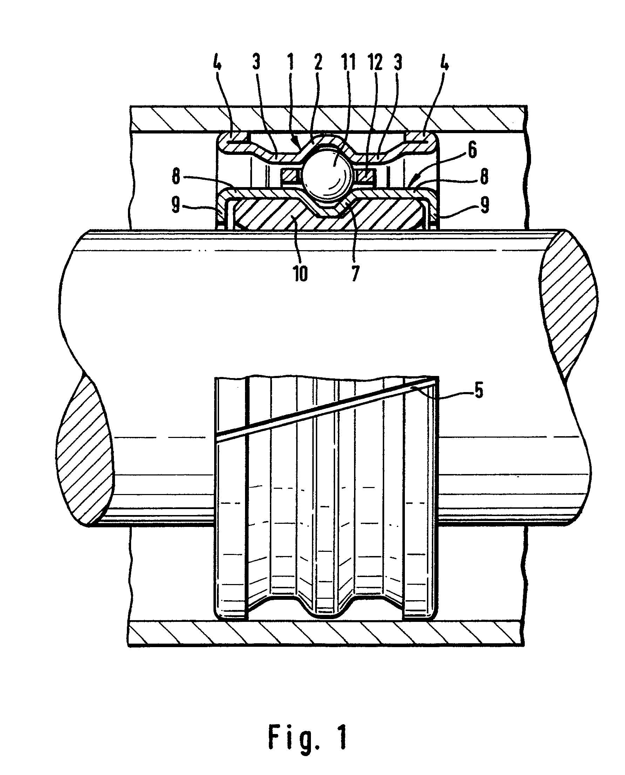

Figur 1 zeigt den aus einem Blechband rundgebogenen äußeren Laufring 1, der in seinem mittleren Bereich eine eingeformte Kugellaufbahn 2 aufweist. In beiden axialen Richtungen schließen sich an diese Kugellaufbahn angeformte zylindrische Verlängerungen 3 an, die in ihren Endbereichen zur Bildung von Versteifungsborden 4 nach außen umgefaltet ist. Im Bereich dieser Versteifungsborde 4, die gleichzeitig die Sitzflächen für den Laufring 1 bilden, weist der äußere Laufring 1 einen größeren Durchmesser auf, als im Bereich der Kugellaufbahn 2. Das Blechband, aus dem der äußere Laufring 1 gebildet ist, ist an seinen beiden Enden derart schräg abgeschnitten, daß sich nach dem Rundbiegen eine zur Lagerlängsachse geneigte Fuge 5 ergibt.

Der innere Laufring 6, der ebenfalls aus einem Blechband rundgerollt ist, weist ebenfalls eine Kugellaufbahn 7 auf, an die sich in beiden axialen Richtungen zylindrische Verlängerungen 8 anschließen, die ihrerseits in radial nach innen gerichteten Borden 9 enden. In der Bohrung des inneren Laufringes 6 ist ein Ring 10 aus polymerem Werkstoff angeordnet, der in an sich bekannter Weise in seiner Bohrung mit Längsrippen versehen sein kann.

In den beiden Kugellaufbahnen 2 und 7 rollen Kugeln 11 ab, die in einem schematisch dargestellten Käfig 12 auf Abstand gehalten sind.

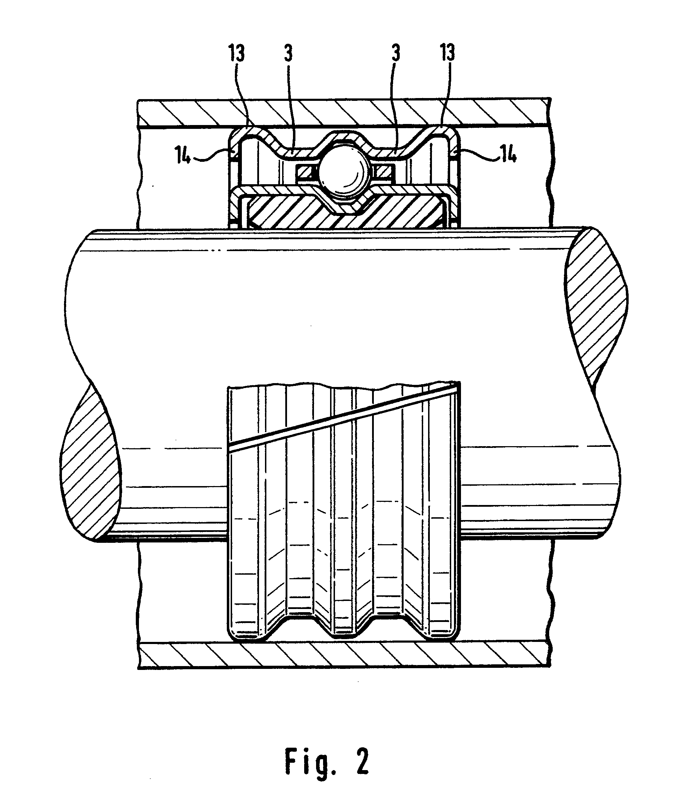

Die in Figur 2 dargestellte Variante unterscheidet sich von der Ausführung nach Figur 1 lediglich dadurch, daß der Außenring im Anschluß an die zylindrischen Verlängerungen 3 zur Bildung von Sitzflächen 13 radial nach außen geformt ist und daß sich an diese Sitzflächen 13 radial nach innen gerichtete Versteifungsborde 14 anschließen.

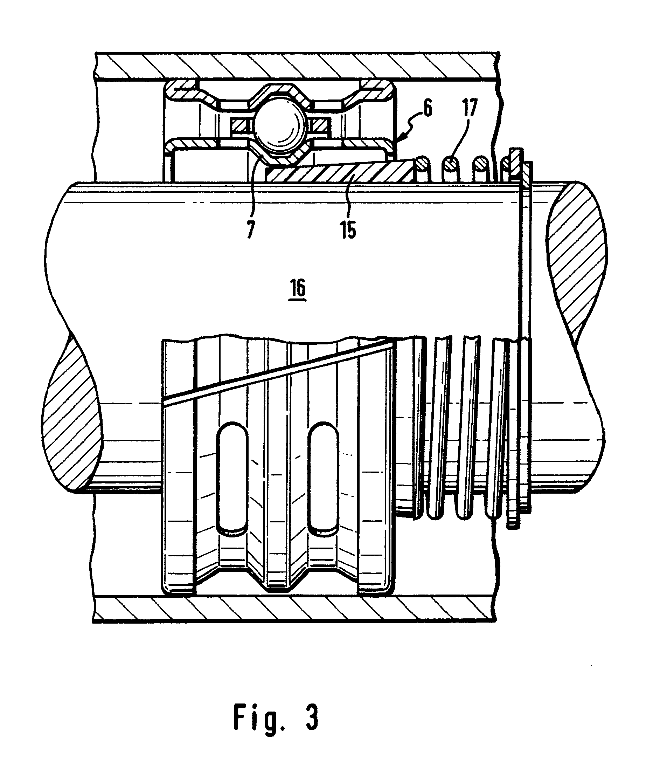

Die in Figur 3 gezeigte Ausführung unterscheidet sich von der nach Figur 1 lediglich dadurch, daß innerhalb des Innenringes anstelle der Hülse 10 aus polymerem Werkstoff hier eine Keilhülse 15 vorgesehen ist, die sich einerseits auf der Welle 16 und andererseits an der Kugellaufbahn 7 des Innenringes 6 abstützt. Stirnseitig wirkt auf diese Keilhülse 15 eine Schraubenfeder 17, die sich an ihrem anderen Ende an einem Absatz der Welle 16 abstützt und die dafür sorgt, daß der innere Laufring 6 stets in spielfreier Abstützung gegenüber der Welle 16 verbleibt.

Die Erfindung läßt es zu, den einen oder beide Laufringe an der Fuge 5 durch Verschweißen zu verbinden. Das Verschweißen erfolgt in diesem Falle lediglich im Bereich der zylindrischen Verlängerungen 3 bzw. im Bereich der Versteifungsborde 4, bzw. 14, um schädliche Temperatureinflüsse im Bereich der Kugellaufbahnen 2 bzw. 7 zu vermeiden.

**Patentansprüche**

1. Radial-Kugellager mit zwei aus Blechband rundgebogenen Laufringen, in welche Kugellaufbahnen eingeformt sind, in denen Kugeln abrollen, die vorzugsweise in einem Käfig auf Abstand gehalten sind, **dadurch gekennzeichnet, daß**
   - die Laufringe (1, 6) in beiden axialen Richtungen im Anschluß an die Kugellaufbahnen (2, 7) mit angeformten zylindrischen Verlängerungen (3, 8) versehen sind,
   - an wenigstens den äußeren Laufring (1) Versteifungsborde (4, 14) angeformt sind,
   - der äußere Laufring im Bereich der Kugellaufbahn (2) einen geringeren Außendurchmesser, als im Bereich der Versteifungsborde (4, 14) aufweist.

2. Kugellager nach Anspruch 1, **dadurch gekennzeichnet, daß** der innere Laufring (6) in seiner Bohrung zur Toleranzüberbrückung eine Hülse (10) aus polymerem Werkstoff enthält, die zwischen radialen Borden (9), die an die Endbereiche der Verlängerungen (8) angeformt sind, gehalten ist.

3. Kugellager nach Anspruch 1 oder 2, **dadurch gekennzeichnet, daß** die Fugen (5), an denen die Enden der Blechbänder aneinandergrenzen, zur Lagerlängsachse geneigt sind.

4. Kugellager nach Anspruch 1, 2 oder 3, **dadurch gekennzeichnet, daß** wenigstens einer der Laufringe an der Fuge verschweißt ist.

5. Kugellager nach Anspruch 4, **dadurch gekennzeichnet, daß** die Schweißverbindung nur im Bereich der zylindrischen Verlängerungen (3, 8), bzw. der Versteifungsborde (4, 14) vorgesehen ist.

6. Kugellager nach einem der vorhergehenden Ansprüche, **dadurch gekennzeichnet, daß** der beim Abschneiden des Blechbandes an der Schnittkante auftretende Materialeinzug im rundgebogenen Laufring von der Kugellaufbahn wegweist.

Fig. 1

**Fig. 2**

Fig. 3

**Europäisches Patentamt**

# EUROPÄISCHER RECHERCHENBERICHT

Nummer der Anmeldung

## EP 90 12 5807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 069 549  (RIV-SKF)<br>* Seite 8; Figuren 6,7 *<br>– – – | 1,2 | F 16<br>C 33/58 |
| X | FR-A-1 566 650  (S.N.R.)<br>* Seite 2; Figur 5 * | 1 | |
| A | | 2 | |
| | – – – | | |
| A | FR-A-1 550 919  (NORTH AMERICAN ROCKWELL)<br>* Das ganze Dokument *<br>– – – | 1 | |
| A | FR-A-2 239 149  (RENAULT-PEUGEOT)<br>* Figur 2 *<br>– – – | 3 | |
| A | FR-A-2 382 611  (S.N.R.)<br>– – – – – | | |

| | | RECHERCHIERTE SACHGEBIETE (Int. Cl.5) |
|---|---|---|
| | | F 16 C |

Der vorliegende Recherchenbericht wurde für alle Patentansprüche erstellt

| Recherchenort | Abschlußdatum der Recherche | Prüfer |
|---|---|---|
| Den Haag | 18 April 91 | ORTHLIEB CH.E. |